# EUROPEAN PATENT SPECIFICATION

(11) **EP 0 740 020 B1**
(45) Date of publication and mention of the grant of the patent: **30.07.2003**
(21) Application number: 95401522.8
(22) Date of filing: 27.06.1995
(51) Int. Cl.: D21H 27/38, D21D 1/00, B32B 29/00, B32B 31/00, D21H 27/22

(54) **Postforming decorative laminates**
Nachformen von dekorativen Schichtstoffen
Postformage de stratifiés décoratifs

(30) Priority: 28.04.1995 US 426531
(43) Date of publication of application: 30.10.1996
(73) Proprietor: WESTVACO CORPORATION, New York New York 10171 (US)
(72) Inventor: Knox, David E., Goose Creek, South Carolina 29445 (US); Fortin, Donato J., Charleston, South Carolina 29414 (US); Hintz, Harold L., Mount Kisco, New York 10549 (US); Klein, Edward P., Goose Creek, South Carolina 29445 (US); Streisel, Robert C., Mt. Pleasant, South Carolina 29464 (US); Nuzum, Stanley M., Mt. Pleasant, South Carolina 29464 (US)
(74) Representative: Moutard, Pascal Jean

(56) References cited:
- EP-A- 0 015 316
- AT-A- 354 744
- DE-A- 2 901 143
- GB-A- 2 085 497
- US-A- 4 060 450
- US-A- 4 405 690
- US-A- 5 021 122
- US-A- 5 080 758
- US-A- 5 443 902
- DATABASE WPI Week 9037 Derwent Publications Ltd., London, GB; AN 90-278520 XP002011146 & JP-A-02 194 951 (HITACHI CHEMICAL KK)

## Description

### BACKGROUND OF THE INVENTION

### 1. Field of the Invention

The present invention relates to new and useful improvements in paper manufacture and, more directly, relates to the provision of resin absorbent papers for the manufacture of high and low pressure fiber reinforced plastic laminates with improved postforming characteristics.

### 2. Description of the Prior Art

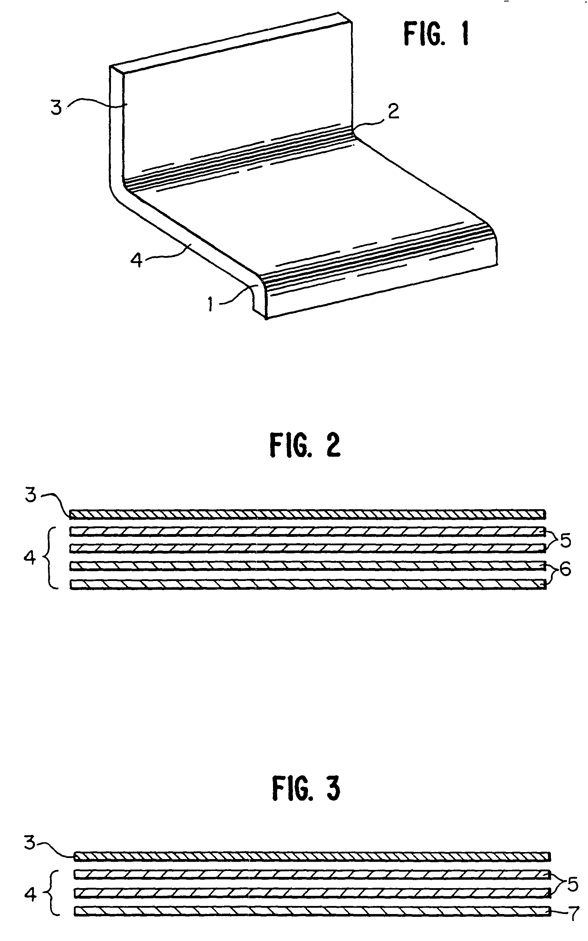

Postforming laminates are laminates that, after initial curing in a press, can be reheated along an axis and bent to give a material that has smooth, round, undamaged surfaces in either the forward or the backward direction. Such bends are depicted in FIGURE 1. Forward bend 1 (sometimes called a "bullnose bend"), where the decorative side (or layer) 3 of the laminate is in tension, is generally a large radius bend exhibiting a radius of 6 mm to 12 mm (1/4 inch to 1/2 inch). Tight bends with small radii may lead to damage in the laminate that can appear upon forming or at a later time in use and give failures that would be correctable only at great expense. Attempts to bend the decorative side in tension around a very tight radius 1.5 mm to 4.7 mm (i.e., 1/16 inch to 3/16 inch) generally are unsuccessful due to the relatively high modulus with low elongation at break of the decorative layer. In general, forward bends of laminates are done at larger radii.

In contrast, a backward bend 2 of a laminate, where the decorative side 3 of the laminate is in compression and the core side 4 (shown in FIGS. 2 and 3 to be comprised of internal core sheets 5 covered with one or more postforming sheets 6 or 7, respectively) is in tension, generally is postformed to much tighter radii. This is due to the fact that the core side 4 of the laminate, which is impregnated with phenol/formaldehyde resin, can, by using appropriate paper or resin modifications, be made to have a lower modulus with a higher elongation at break than the decorative side 3. Another reason for the tighter attainable radii is the fact that the outer (tension) layer of the core side 4 can be modified to give a laminate that is better able to tolerate tensile strains imposed on it during bending. Summarizing, decorative postforming laminates must be able to be bent with either the decorative or the core side in both tension and compression.

A number of approaches have been taken to improve the performance of decorative postforming laminate bends. The prior art comprises various modifications to improve the bending ability of the decorative laminates in the forward direction. Improvements in the forward bends can be made by changing the furnish of the paper. For example, U.S. Patent No. 3,327,084 teaches the use of low coarseness (thin and long) fibers as being superior to the use of thicker, high-coarseness fibers. Improvements in crazing, which is the undesirable tendency of the laminate to have cracking on the surface, were noted with the lower coarseness fibers. Shorter fiber species, (e. g., hardwoods) which may have low coarseness, were indicated as being inferior in postforming characteristics. In addition, the use of low denier synthetic fibers such as nylon and acrylic fibers was found to give improvements in crazing when used at levels of between 35% and 100% in the paper. Although this technology appears viable, the use of longer fiber length, low coarseness, natural fibers generally limits the papermaker to juvenile trees or slow-growing northern species, and synthetic fibers are considerably more expensive than wood fibers.

A second means of adding postformability to a laminate, especially for in the forward (or, bullnose) direction, is to modify the melamine resin that is used to impregnate the decorative layer. A variety of modifications to the decorative layer have been described including the use of caprolactams (U.S. 2,584,177), glucosides (U.S. 2,773,788), carbamates (U.S. 2,937,966), mannatin (U.S. 3,194,723), epoxies (U.S. 4,046,937), and polyethyleneglycols (U.S. 4,405,690).

Several prior art references describe modifications to the phenolic resin in the core sheets. These modifications include the use of water/glycerol, as in Canadian Patent No. 778,750, to enhance the performance of forward bends by enabling the core to undergo greater compressive failure, thereby inducing less tensile strain in the decorative layer. In Canadian Patent 894,859, the use of glycols and fatty acid oils as coreactants for the phenolic resin is described. In all cases, however, the use of these materials was to improve the appearance of the forward bend.

Current commercial postforming laminates employ one or several lightweight sheets on the back of the laminate. This laminate construction is shown in FIGURE 2 to be comprised of the decorative layer (or side) 3 and the core side 4. The lightweight postforming sheets 6 that are used on the back of this laminate are a multi-walled sack paper that is made from northern low coarseness softwood. It has been accepted that high CD (cross direction) stretch in a paper sheet is necessary for use in the postforming layer of a laminate.

Paper of this type is available in low basis weights of 122 g/m² (75 lbs./3000 ft²) from RePap Industries in LaPas, Alberta, Canada. The primary market for this paper is bag stock rather than laminates. Although this paper is known to give good bending characteristics to the laminate, it suffers from several deficiencies including poor inherent treatability (due to sheet construction) and low basis weight. For standard horizontal grade postforming laminates of about 0.94 mm (0.037) inch thickness, the postforming sheets comprise about 1/3 of the mass of the laminate core, and two 122 g/m² (75 lbs./3000 ft²) sheets must be used. Therefore, twice as many linear feet of paper must be treated compared to having a product which requires only one sheet of 244 g/m² (150 lbs./3000 ft²). In addition, since the lighter weight papers are designed as extensible sheets, they tend to give poor dimensional stability to laminates. The use of multiple sheets with low basis-weight also requires additional collating costs in the layup of the laminate. Thus, the current commercial product results in relatively slow production rates and higher costs to the laminator.

Therefore, an object to this invention is to provide a sheet that overcomes many of the problems associated with the current commercial product; specifically, it provides a high basis weight sheet that is easier to treat and less costly to use than the lighter-weight products. It is a further object of this invention to provide an improved high basis weight postforming sheet exhibiting reduced resin saturation into the sheet.

Document GB-2085497 discloses a treatment for improving saturability in normal saturating furnish. A resin saturating paper is produced by a mechanical treatment of various types of alkaline pulp.

Document US-4060450 discloses a high yield saturating paper containing total lignin in amounts of 8 to 15%, employed as core stock for high-pressure decorative melamine laminates.

Document AT-354744 discloses a laminate comprising a decorative layer, a core layer and a resin impregnated "overlay-paper" (35g/m²).

### BRIEF DESCRIPTION OF DRAWINGS

FIGURE 1 shows the manner in which decorative postforming laminates must be able to be bent with either the decorative side 3 or the core side 4 in both tension and compression.
FIGURE 2 depicts a cross-section view of a postforming laminate of current construction with multiple lightweight, normally <130 g/m², (normally <80 lbs,/3,000 ft²) postforming sheets **6** on the back of the core side **4** of the laminate.
FIGURE 3 shows, in cross-section, the construction of the laminates depicted in FIGURE 1 and, in particular, the laminate construction wherein a single high-basis weight, >130 g/m² to about 505 g/m², (>80 to about 310 lbs./3,000 ft²) postforming sheet **7** has replaced the two sheets of the conventional construction shown in FIGURE 2.

### SUMMARY OF THE INVENTION

The invention concerns a method for preparing a postformable laminate comprising a decorative layer, a core layer of resin-saturable paper, and an extensible sheet, wherein the layers are treated with resin and pressed together under heat, the extensible sheet having been subjected to restrained drying and comprising a sheet, prepared from predominantly hardwood pulp subsequently subjected to a mechanical treatment at an energy nput of at least 0.0394 kWh/kg (2 hp-days/ton) such as to impart kinking and curling characteristics to individual pulp fibers, said sheet having a directional strech of from 1% to 4%. As a result, the above-stated object is achieved, the method resulting in an improved laminate constructed with a paper sheet enabling the laminate to be bent in both the forward and the backward direction as shown in FIGURE 1 with little or no evidence of crazing. The paper sheet is comprised primarily of hardwood pulped fibers which have been subjected to a particular mechanical action. The sheet can be prepared from either refined or unrefined wood pulp. If the pulp is refined, the mechanincal energy input is preferably at least about 0.0591 kWh/kg (about 3 hp-days/ton). If the pulp is unrefined, the mechanincal energy input is preferably at least about 0.0788 kWh/kg (about 4 hp-days/ton).

### DESCRIPTION OF THE PREFERRED EMBODIMENT(S)

This invention describes new compositions for decorative postforming laminates. This invention also describes a process for the manufacture of a sheet that, when used in laminates having the new compositions, can be used to enhance the bending ability of decorative postforming laminates. Of particular interest is the appearance of the backbend with this sheet since it enables the laminate to be bent to a very tight radius of as low as 3 mm (1/8") with negligible cracking or crazing. The construction of the laminates in this invention is shown in FIGURE 3 where a single high-basis weight sheet has replaced the two sheets as shown in FIGURE 2. For the purposes of this invention, the special postforming sheet is placed on the back of the laminate farthest away from the decorative sheet. As is well known to those proficient in the art of making laminates, a sand-off sheet, or portions of a sand-off sheet may remain on this outermost core sheet after final laminate production. Also, it is possible to use a plurality of these postforming sheets in the core in which case added benefits to bending are observed. In addition, the sheet described in this invention has improved (faster) treatability compared to lighter weight products that are currently used.

As earlier noted, co-pending U.S. Patent Application S.N. 188,718 discloses the use of high coarseness, high kappa number, softwood pulp obtained predominantly from southern loblolly pine for the manufacture of a postforming sheet that gave excellent backbend characteristics to laminates. The present invention describes the use of shorter fibers (hardwood fibers) to attain similar bending characteristics that habe been observed with softwood fibers. Surprisingly, however, the use of shorter fibers gave good bending characteristics while also providing for lower and more controlled resin saturation in a sheet. This is in direct contrast to earlier findings which indicated that long fibers were preferential for good postforming. The current invention discloses a method for producing laminates while using only a single sheet in the side farthest from the core. A release sheet may or may not be used in the laminate construction. The hardwood that is used in the present invention is treated in a device that effectively imparts a large amount of curling and kinking to the fiber.

A number of kinking and curling devices are known and include Frotapulpers (Ingersoll-Rand), Chemifiners (Black-Clawson), Micar Mixers (Black-Clawson), and Pressafiners (Andritz Sprout-Bauer). The devices listed above, as well as other devices to induce curling and kinking, may be used without departing from this invention. In the current invention, the means of adding improved postformability is only the use of curled and kinked fibers, produced by treating pulp in a device such as one of those indicated above. This is distinctly different from the current commercial products that employ unrestrained drying or other processes such as creping in order to achieve the desired effect of high CD stretch. The sheets that are the preferred embodiment of this invention have a cross-directional stretch of from about 1% to about 4%; whereas sheets with unrestrained drying have stretches in the cross-section of from 5% to 7%, and creped sheets can have CD stretch as high as 25%. The sheets that are the preferred embodiment of this invention also generally exhibit a lower MD/CD (machine direction/cross direction) tensile ratio (same as tensile modulus) than the current commercial product. Although pulp for the current commercial product is believed to be treated in a Frotapulper, the treatment does not impart sufficient mechanical action (or energy) to the pulp to allow for good postforming (see Example 2 and 3 in Table I). Other high-consistency devices that give curled fibers such as high-pressure, high-consistency refiners are also known to those skilled in the art.

In this invention pulp is treated in a device that imparts curl and kinking to the fiber. While we do not wish to be limited to any theory concerning why a sufficiently large amount of fiber curling and kinking gives enhanced postforming, it appears that the curling and kinking imparted to the fibers by this treatment, without increasing bulk stretch in the sheet, is a controlling factor in determining the quality of the bends in the postforming laminate. In contrast to softwood-based sheets, which undergo a relatively large modulus decrease as more curled and kinked fibers are incorporated into the paper, hardwood-based sheets do not undergo such a large modulus decrease (Table III). We have found that it is necessary to impart a sufficient amount of energy to the pulp in order to curl and kink a sufficient number of fibers to impart good bending characteristics to the laminates.

A description of the effects of fiber curling and kinking on paper modulus has been given by Page, et. al., in *TAPPI*, *60,* No. 4, 1977, p. 114; *TAPPI*, *62,* No. 9, 1979, 99; and *TAPPI*, *63,* No. 6, 1980, 113 which teachings are incorporated herein by reference. Kinked and curled fibers are lower modulus and essentially zero-load bearing fibers. They act as springs which are able to be stretched prior to bearing load. These fibers inhibit crack propagation since stress transfer to these fibers results in restretching (or uncoiling) the fibers rather than in causing continued fiber and/or matrix rupture and damage to the laminate. Although the modulus of the hardwood-based sheets are not as low at a given amount of fiber incorporation, another controlling factor in the modulus of paper is the amount of fiber to fiber bonding that occurs in a sheet. Since there are considerably more lower coarseness fibers per gram, there are more fiber to fiber bond sites which may occur in sheets containing lower coarseness fibers. Again, although we do not wish to be restricted to any theory, this gives a relatively higher modulus while still having spring-like fibers available for restretching and microdamage control during bending. The strain and moduli of sheets made using either softwood or hardwood having different amounts fibers that have been treated to give curling and kinking are shown in Table III.

In addition to giving a sheet with excellent bending characteristics, the use of curled and kinked hardwood enables more controlled saturation characteristics in the sheet compared to pine. (See Table V.) This invention, therefore, enables the use of hardwood fibers. Not only do the hardwood fibers give sheets with more controlled saturation characteristics, but they also give sheets with better formation (i. e., lower local density variation). Therefore, this invention is concerned with the use of a predominantly hardwood based furnish in the outermost layer of the laminate although other laminate constructions are possible without departing from this invention.

For purposes of evaluation, the visual appearance of the laminate bends was evaluated on a scale of five ("5") to one ("1") with a "5" rating being the best and a "1" rating being the worst. The scale used is as indicated below.
5 = excellent appearance; no sign of crazing
4 = very good appearance; only minor crazing lines appear
3 = fair appearance; moderate degree of crazing but no cracking
2 = poor appearance; severe crazing and some obvious cracking
1 = very poor appearance; obvious through cracking
Following Examples 1 - 12 and 14 - 15 are not covered by the scope of the claims.

### Example 1

A sheet consisting of a predominantly softwood (≥ 80%) furnish was fabricated at a basis weight of 244 g/m² (150 #/3000 ft²) and 261 g/m² (160#/3000 ft²) using a standard 25.4 mm x 25.4 mm (12" x 12") handsheet mold. The sheet was wet-pressed in a static Williams press at 1N/mm² (135#/in²) for 15 minutes. The sheet was allowed to air-dry overnight with restraining rings. Subsequent to this, the sheet was dry calendered at 53.6 Kg/cm (300 pli). The dried sheet was treated with a phenolic resin to obtain between 24% and 37% resin content on a bone dry basis.
The preferred amount of resin is between 27% and 30% on a bone dry basis. This sheet was put into a laminate construction shown in Figure 1 with a single softwood-based sheet at the outermost section of the core. The other core sheets consisted of two 254 g/m² (156#/3000 ft²) predominantly hardwood based sheets. A decorative layer also is used in the laminate construction. A laminate constructed in this fashion was pressed in a heated hydraulic press at from about 7 N/mm² to about 8.3 N/mm² (about 1000 psi to about 1200 psi) for approximately 50 minutes to a maximum temperature of 130°C (265°F). The laminates next were removed from the press and cut into three-inch strips in the cross direction of the laminate. These strips were marked with wax that melts at 165°C (325°F) and heated over a radiant heater until the wax melted (about 30-35 seconds). The laminates then were bent with the core side in tension to a radius of 3 mm(1/8"), and the backs of the laminates were inspected for the appearance of crazing or other defects. Laminates made with a sheet containing a predominant softwood furnish showed signs of crazing that indicated moderate signs of laminate damage; these laminates were given a "1" or a "2" rating on the scale indicated above.

### Example 2

Two sheets of lightweight bagstock sheets 122 g/m² (75#/3000 ft²) from RePap Industries, LaPas, Alberta, Canada were treated to a resin content of between 27% and 30% using the same phenolic resin described in Example 1. Two of these sheets were then used as the back core sheets of a laminate as a substitute for the higher basis weight paper described in Example 1. When a laminate treated in a similar fashion as Example 1 was bent to a 3 mm (1/8") radius, the laminate showed no signs of crazing and was generally rated as a "4" or "5" on the scale indicated above.

### Example 3

The lightweight bagstock sheet paper described in Example 2 was rewet by soaking the paper for several minutes after which the paper was dried in restraining rings overnight. This dried paper was treated with phenolic resin and used on laminates as described in Example 2. When laminates containing this paper were bent, the backs of the laminates were largely crazed and showed significant signs of damage. These laminates generally obtained a "1" or a "2" rating. This comparative example demonstrates that when the RePap sheet is dried under restraint (preventing cross-direction shrinkage) it loses its cross-directional stretch, resulting in loss of performance. This indicates that unrestrained drying is a necessary condition for performance of this sheet.

### Examples 4-12

These examples demonstrate how this invention may be practiced with the treatment of unrefined softwood pulp. These examples are shown for fiber treatment in an Andritz Sprout-Bauer Impressafiner device. Results are indicate in the following Table I.

**Table I**

| **Example** | **Energy Input** kWh/kg (hpdt) | **Modulus of Sheet** 2 N/mm (kpsi) | **Strain to Break of Sheet (%)** | **Laminate Bend Performance** |
|---|---|---|---|---|
| **Extensible Sheet from RePap Industries** | | | | |
| **2** | -- | 21.2 (3.07) | **6.8** | 4 to 5 |
| **3 (Rewetted and Restrained Dried)** | -- | 21.6 (3.13) | **3.7** | 1 1 |

| **Invention Unrefined Pulps** | | | | |
|---|---|---|---|---|
| **4** | 0.0175 (0.89) | 25.5 (3.69) | **2.2** | **1** to **2** |
| **5** | 0.0353 (1.79) | 21.4 (3.11) | **2.3** | **1** to **2** |
| **6** | 0.0209 (1.06) | 32.0 (3.34) | **2.9** | **1** to **2** |
| **7** | 0.0605 (3.07) | 15.7 (2.27) | **2.7** | **2** to **3** |
| **8** | 0.0473 (2.40) | 15.6 (2.26) | **2.7** | **1** to **2** |
| **9** | 0.1387 (7.04) | 13.7 (1.99) | **2.9** | **4** to **5** |
| **10** | 0.0925 (4.69) | 16.6 (2.40) | **3.0** | **4** to **5** |
| **11** 1 | 0.1983 (10.06) | 7.5 (1.09) | **2.3** | **4.5** to **5** |
| Pulp Steamed to 60°C to 76.6°C (140°F to 170°F) Prior to Treatment | | | | |
| **12** | 0.0463 (2.35) | 9.9 (1.44) | **2.1** | **4** to **5** |

| **Invention Refined Pulps** | | | | |
|---|---|---|---|---|
| **13 (pH=7.7)** | 0.0631 (3.2) | 14.9 (2.16) | **2.6** | **4** to **5** |
| **14 (pH=5.4)** | 0.0473 (2.4) | 10.9 (1.58) | **3.1** | **3** to **4** |

As the compression ratio on the pulp is increased, the energy input to the pulp also increases, and the performance of the laminate bend is greatly improved. It is apparent also from Example No. 12 that pulp may be raised in temperature by steaming or other methods prior to treatment and that good laminate bending results can be obtained at the elevated treatment temperatures while still maintaining good laminate bending performance. In the case of steaming, the energy input to the pulp to obtain the desired positive effect is considerably less than when starting with a pulp at room temperature.

Thus, the predominantly softwood fiber sheet provided the desired postforming properties in the laminate. Experience with the predominantly softwood sheet, however, disclosed that the laminate formation process is hampered by the very fast resin saturation into the sheet. Therefore, a different fiber make up was tested under the same mechanical treatment criteria.

### Example 13

A sheet consisting of a predominantly hardwood (≥80%) furnish was fabricated at a basis weight of 244 g/m² (150 lbs./3,000 ft²) and 261 g/m² (160 lbs./3,000 ft²) using a standard 25.4 mm x 25.4 mm (12" x 12") handsheet mold. The sheet was wet-pressed in a static Williams press at 1 N/mm² (135 lbs./in²) for 15 minutes. The sheet was allowed to air-dry overnight with restraining rings. The dried sheet was treated with a phenolic resin to obtain between 24% and 28% resin content on a bone dry basis. The preferred amount of resin is between 27% and 28% on a bone dry basis. This sheet was put into a laminate construction shown in Figure 1 with a single hardwood-based sheet at the outermost section of the core. The other core sheets consisted of two 254 g/m²(156 lbs./3000 ft²) predominantly hardwood based sheets. A decorative layer also is used in the laminate construction. A laminate constructed in this fashion was pressed in a heated hydraulic press at from about 7 N/mm² to about 8.3 N/mm² (about 1000 psi to about 1200 psi) for approximately 50 minutes to a maximum temperature of 130°C (265°F). The laminates next were removed from the press and cut into three-inch strips in the cross direction of the laminate. These strips were marked with wax that melts at 165°C (325°F) and heated over a radiant heater until the wax melted (about 30-35 seconds). The laminates then were bent with the core side in tension to a radius of 3mm (1/8"), and the backs of the laminates were inspected for the appearance of crazing or other defects. Laminates made with a sheet containing only a hardwood furnish showed signs of cracking and crazing that indicated damage to the laminate; these laminates were given a "1" rating on the scale indicated above.

### Example 14

Two sheets of lightweight bagstock sheets 122 g/m² (75 lbs./3000 ft²) from RePap Industries, LaPas, Alberta, Canada were treated to a resin content of between 27% and 30% using the same phenolic resin described in Example 1. Two of these sheets were then used as the back core sheets of a laminate as a substitute for the higher basis weight paper described in Example 13. When a laminate treated in a similar fashion as Example 1 was bent to a 3 mm (1/8") radius, the laminate showed no signs of crazing and was generally rated as a "4" or "5" on the scale indicated above.

### Example 15

The lightweight bagstock sheet paper described in Example 2 was rewet by soaking the paper for several minutes after which the paper was dried in restraining rings overnight. This dried paper was treated with phenolic resin and used on laminates as described in Example 14. When laminates containing this paper were bent, the backs of the laminates were largely crazed and showed significant signs of damage. These laminates generally obtained a "1" or a "2" rating. This comparative example demonstrates that when the RePap sheet is dried under restraint (preventing cross-direction shrinkage) it loses its cross-directional stretch, resulting in loss of performance. This indicates that unrestrained drying is a necessary condition for performance of this sheet.

**Table II**

| Example | Modulus of Sheet N/mm² (kpsi) | Strain to Break of Sheet (%) | Laminate Bend Performance |
|---|---|---|---|
| 14 | 21.2 (3.07) | 6.8 | 4 to 5 |
| 15 (Rewetted and Restrained Dried) | 21.6 (3.13) | 3.7 | 1 |

### Examples 16-20

These examples demonstrate how this invention may be practiced with the treatment of unrefined hardwood pulp. These examples are shown for fiber treatment in an Andritz Sprout-Bauer Impressafiner device at an energy input level of between 0.0394 kWh/kg and 0.2955 kWh/kg (2 and 15 hpdt). Results are indicated in the following Table III.

**TABLE III**

| Modulus Decrease vs. Curled and Kinked Fiber Incorporation Energy Input to Pulp Between 0.0394 kWh/kg and 0.2955 kWh/kg (2 and 15 hpdt) | | | | | |
|---|---|---|---|---|---|
| **Example** | **Condition (% Curled and Kinked Fibers)** | **Curled and Kinked Hardwood** N/mm² (kpsi) | **Bend Rating** | **Curled and Kinked Softwood** N/mm² (kpsi) | **Bend Rating** |
| 16 | 0% | 29.0 (4.2) | 1 | 29.0 (4.2) | 1 |
| 17 | 25% | 25.5 (3.7) | 1-2 | 21.4 (3.1) | 1-2 |
| 18 | 50% | 23.5 (3.4) | 2-3 | 19.3 (2.8) | 2-3 |
| 19 | 75% | 22.8 (3.3) | 4-5 | 17.2 (2.5) | 4-5 |
| 20 | 100% | 21.4 (3.1) | 4.5-5 | 13.1 (1.9) | 4-5 |

### Examples 21-25

These examples (Table IV) demonstrate that pulp which has been subjected to disk refining can also be used as a postforming sheet in laminates. Only at the highest energy inputs in disk refining (3.37 hpdt) did a alight decrease in performance occur.

For these examples 100% of the pulp had been subjected to mechanical treatment to induce curling and kinking.

**TABLE IV**

| **Example** | **Disk Refiner Energy** | | **Laminate Bend Performance** |
|---|---|---|---|
| | kWh/kg | (hpdt) | |
| 21 | 0 | (0) | 4-5 |
| 22 | 0.0183 | (0.93) | 4-5 |
| 23 | 0.0367 | (1.86) | 4-5 |
| 24 | 0.0550 | (2.79) | 4-5 |
| 25 | 0.0664 | (3.37) | 3.5-4 |

Either unrefined or refined pulp may be used and either high- or low-pH pulps may be employed. This is significant, since the options for flexible processing of the pulp are evident.

### Examples 26-33

This example is to demonstrate that sheets made with curled and kinked hardwood have more controlled resin pickup. To conduct this study, machine-made paper was dipped into a resin bath, and subjected to pressure rolls to squeeze off excess surface resin. Since it is usually preferable to have resin contents in laminate core sheets at less than 30% based on the dry weight of resin, it can be seen from Table V that sheets with curled and kinked hardwood fibers picked up resin in the desired range whereas sheets with curled and kinked softwood did not.

**Table V**

| Example | Condition | Percent Phenolic Resin Pickup |
|---|---|---|
| 26 | Control (no Curled or kinked fibers) | 24.5 |
| 27 | 40% Curled and Kinked Pine | 30.6 |
| 28 | 60% Curled and Kinked Pine | 31.8 |
| 29 | 80% Curled and Kinked Pine | 33.5 |
| 30 | 20% Curled and Kinked Hardwood | 25.9 |
| 31 | 60% Curled and Kinked Hardwood | 27.6 |
| 32 | 80% Curled and Kinked Hardwood | 28.6 |
| 33 | 90% Curled and Kinked Hardwood | 29.3 |

While the invention has been particularly shown and described with reference to the preferred embodiments thereof, it will be understood by those skilled in the art that various alterations in form and detail may be made.

## Claims

1. A method of preparing a postformable laminate comprising a decorative layer, a core layer of resin-saturable paper, and an extensible sheet, wherein the layers are treated with resin and pressed together under heat, the extensible sheet comprising a sheet having been subjected to restrained drying, predominantly hardwood pulp subsequently subjected to a mechanical treatment at an energy input of at least 0.0394 kWh/kg (2 hp-days/ton) such as to impart kinking and curling characteristics to individual pulp fibers, said sheet having a cross-directional stretch of from 1% to 4%.

2. The method according to claim 1 wherein the sheet's basis weight is from 130 g/m² to 505 g/m² or 161 g/m² to 605 g/m².

3. The method of claim 2, wherein the sheet's basis weight is from 130 g/m² to 404 g/m².

4. The method according to any of claim 2 or 3, wherein the sheet's basis weight is from 235 g/m² to 260 g/m² (145 pounds/3,000 ft.² to 160 pounds/3,000ft.²).

5. The method according to any of claims 1 to 4, wherein the resin content of the layers is from 24 to 37% and the layers are pressed together at a pressure from 7N/mm² to 8.3N/mm².

6. The method according to any one of claims 1 to 5, wherein the hardwood pulp is predominantly refined hardwood pulp **characterized by** a basis weight of 160-305 g/m² (99-310 pounds/3,000 ft.²), and the mechanical energy input is at least 0.0591 kWh/kg (about 3 hp-days/ton).

7. The method according to any one of claims 1 to 5, wherein the hardwood pulp is predominantly unrefined hardwood pulp **characterized by** a basis weight of 160-305 g/m² (99-310 pounds/3,000 ft.²), and the mechanical energy input is at least 0.0788 kWh/kg (at least about 4 hp-days/ton).

8. The method according to any one of claims 1 to 7, wherein said pulp has been subjected to a multiple of said mechanical treatments.

9. The method according to any one of claims 1 to 8, wherein said pulp is raised in temperature prior to the mechanical treatment.

10. The method according to claim 9, wherein the rise in temperature is produced by introducing steam into the pulp.

11. The method according to any one of claims 1 to 10, wherein said wood pulp is subjected to refining prior to being subjected to the mechanical treatment which imparts kinking and curling characteristics to individual pulp fibers.

## Patentansprüche

1. Ein Verfahren zur Herstellung eines vorgeformten Laminats umfassend eine dekorative Schicht, eine Kernschicht aus harzsättigbarem Papier und ein elastisches Blatt,
**dadurch gekennzeichnet,**
**dass** die Schichten mit Harz behandelt und unter Hitze zusammengepresst sind, dass das elastische Blatt ein Blatt umfasst, das eingeschränkter Trocknung ausgesetzt wurde, dass überwiegend vorbereiteter Laubholzzellstoff anschließend derart einer mechanischen Behandlung bei einem Energieeintrag von mindestens 0,0394 kWh/kg (2 hp-days/ton) ausgesetzt wird, dass einzelnen Zellstofffasern Knickund Rollcharakteristika verliehen wird, wobei das Blatt eine quer gerichtete Dehnung von 1 % bis 4 % aufweist.

2. Verfahren nach Anspruch 1,
**dadurch gekennzeichnet,**
**dass** das Basisgewicht des Blatts 130 g/m² bis 505 g/m² oder 161 g/m² bis 605 g/m² beträgt.

3. Verfahren nach Anspmch 2,
**dadurch gekennzeichnet,**
**dass** das Basisgewicht des Blatts 130 g/m² bis 404 g/m2 beträgt.

4. Verfahren nach einem der Ansprüche 2 oder 3,
**dadurch gekennzeichnet,**
**dass** das Basisgewicht des Blatts 235 g/m² bis 260 g/m² beträgt (145 pds/3.000 ft² bis 160 pds/3.000 ft²).

5. Verfahren nach einem der Ansprüche 1 bis 4,
**dadurch gekennzeichnet,**
**dass** der Harzgehalt der Schichten 24 bis 37 % beträgt und die Schichten zusammengepressi sind bei einem Druck von 7 N/mm² bis 8,3 N/mm².

6. Verfahren nach einem der Ansprüche 1 bis 5,
**dadurch gekennzeichnet,**
**dass** der Laubholzzellstoff vorwiegend gemahlener Laubholzzellstoff ist, **gekennzeichnet durch** ein Basisgewicht von 160 - 305 g/m² (99 - 310 pds/3.000 ft²) und der mechanische Energieeintrag mindestens 0,0591 k Wh/kg (ca. 3 hp-days/ton) beträgt

7. Verfahren nach einem der Ansprüche 1 bis 5,
**dadurch gekennzeichnet,**
**dass** der Laubholzzellstoff vorwiegend ungemahlener Laubholzzellstoff ist, **gekennzeichnet durch** ein Basisgewicht von 160 - 305 g/m² (99 - 310 pds/3.000 ft²) und der mechanische Energieeintrag mindestens 0,0788 kWh/kg (mindestens 4 hp-days/ton) beträgt.

8. Verfahren nach einem der Ansprüche 1 bis 7,
**dadurch gekennzeichnet,**
**dass** der Zellstoff einem Mehrfachen der mechanischen Behandlungen ausgesetzt wurde.

9. Verfahren nach einem der Ansprüche 1 bis 8,
**dadurch gekennzeichnet,**
**dass** die Temperatur des Zellstoffs vor der mechanischen Bebandlung erhöht wurde.

10. Verfahren nach Anspruch 9,
**dadurch gekennzeichnet,**
**dass** die Temperaturerhöhung produziert wird durch Einleitung von Dampf in den Zellstoff.

11. Verfahren nach einem der Ansprüche 1 bis 10,
**dadurch gekennzeichnet,**
**dass** der Holzfaserstoff gemahlen wird bevor er der mechanischen Behandlung ausgesetzt wird, welche einzelnen Zellstofffasem Knick- und Rollcharakteristika verleiht.

## Revendications

1. Procédé de préparation d'un stratifié pouvant être postformé comportant une couche décorative, une couche d'âme de papier pouvant être saturé de résine, et une feuille extensible, les couches étant traitées avec de la résine et pressées ensemble à chaud, la feuille extensible comportant une feuille qui a été soumise à un séchage limité, préparée principalement à partir de pâte de feuillus soumise ensuite à un traitement mécanique avec un apport d'énergie d'au moins 0,0394 kWh/kg (2 CV-jour/tonne) de façon à donner des caractéristiques de vrillage et d'ondulation aux fibres de pâte individuelles, ladite feuille ayant un étirement transversal de 1 % à 4 %.

2. Procédé selon la revendication 1, selon lequel le grammage de la feuille est de 130 g/m² à 505 g/m² ou de 161 g/m² à 605 g/ₘ².

3. Procédé selon la revendication 2, selon lequel le grammage de la feuille est de 130 g/m² à 404 g/m².

4. Procédé selon l'une quelconque des revendications 2 ou 3, selon lequel le grammage de la feuille est de 235 g/m² à 260 g/m² (145 livres/3000 pied² à 160 livres/3000 pied²).

5. Procédé selon l'une quelconque des revendications 1 à 4, selon lequel la teneur en résine des couches est de 24 à 37 % et les couches sont pressées ensemble à une pression de 7 N/mm² à 8,3 N/mm².

6. Procédé selon l'une quelconque des revendications 1 à 5, selon lequel la pâte de feuillus est principalement de la pâte de feuillus raffinée **caractérisée par** un grammage de 160 à 305 g/m² (99 à 310 livres/3000 pied²), et l'apport d'énergie mécanique est d'au moins 0,0592 kWh/kg (environ 3 CV-jour/tonne).

7. Procédé selon l'une quelconque des revendications 1 à 5, selon lequel la pâte de feuillus est principalement de la pâte de feuillus non raffinée **caractérisée par** un grammage de 160 à 305 g/m² (99 à 310 livres/3000 pied²), et l'apport d'énergie mécanique est d'au moins 0,0788 kWh/kg (au moins environ 4 CV-jour/tonne).

8. Procédé selon l'une quelconque des revendications 1 à 7, selon lequel ladite pâte a été soumise à plusieurs desdits traitements mécaniques.

9. Procédé selon l'une quelconque des revendications 1 à 8, selon lequel ladite pâte est montée en température avant ledit traitement mécanique.

10. Procédé selon la revendication 9, selon lequel la montée en température est produite en introduisant de la vapeur dans la pâte.

11. Procédé selon l'une quelconque des revendications 1 à 10, selon lequel ladite pâte de bois est soumise à un raffinage avant d'être soumise au traitement mécanique qui donne des caractéristiques de vrillage et d'ondulation aux fibres de pâte individuelles.
